# FASCICULE DE BREVET EUROPEEN

(11) **EP 2 100 430 B1**
(45) Date de publication et mention de la délivrance du brevet: **17.04.2013**
(21) Numéro de dépôt: 07866544.5
(22) Date de dépôt: 28.11.2007
(51) Int. Cl.: H04L 29/08

(54) **Procédé et système de télécommunication permettant à au moins deux utilisateurs distincts d'accéder à un meme ensemble d'informations**
Telekommunikationsverfahren und System mit Zugang zum selben Informationssatz für mindestens zwei verschiedene Benutzer
Telecommunication method and system allowing at least two distinct users to access the same information set

(30) Priorité: 04.12.2006 FR 0655293
(43) Date de publication de la demande: 16.09.2009
(73) Titulaire: FRANCE TELECOM, 75015 Paris (FR)
(72) Inventeur: BESOMBE, Philippe, 22700 Louannec (FR); TOUTAIN, François, 22700 Louannec (FR); PIETO, Loïc, 22300 Rospez (FR)
(74) Mandataire: Boura, Olivier
(86) Numéro de dépôt international: PCT/FR2007/052416
(87) Numéro de publication internationale: WO 2008/068442

(56) Documents cités:
- EP-A- 1 075 119
- US-A1- 2004 233 898

## Description

### Arrière-plan de l'invention

La présente invention se rapporte à un procédé et à un système de télécommunication permettant à différents utilisateurs d'accéder à un même ensemble d'informations, cet ensemble d'informations pouvant comprendre divers types de contenus, comme par exemple des données (fichiers, photos numériques, sons,.) ou des applications multimédia.

L'invention concerne plus particulièrement les technologies permettant à au moins deux utilisateurs, ayant au préalable établi une communication dans un réseau de télécommunication, d'accéder à un même ensemble de données ou plus généralement d'informations. Elle permet notamment à ces deux utilisateurs de partager un même ensemble de données ou d'informations.

Au sens de l'invention, deux utilisateurs sont dits « en communication », lorsqu'ils échangent des informations sur un canal d'un réseau de télécommunication. La communication peut être de différentes natures : il peut s'agir par exemple dune communication téléphonique, dune vidéoconférence, dune session de messagerie instantanée,..

Ainsi l'invention s'applique, de façon privilégiée mais non limitative, à l'accès et au partage d'informations entre plusieurs utilisateurs liés par une conversation téléphonique.

Dans l'état actuel de la technique, il existe des logiciels, comme par exemple le logiciel Orange Link™ de la société Orange, qui permettent à un utilisateur d'entrer en communication, via son ordinateur, avec un correspondant, puis d'autoriser ce correspondant à accéder à des contenus multimédia localisés sur un serveur en vue de partager ces contenus multimédia avec ce correspondant via ce même ordinateur.

Dans de tels systèmes, la même liaison de données est utilisée dune part, pour établir une communication de type voix et/ou vidéo entre les utilisateurs, et d'autre part, pour accéder aux données multimédia lors du partage de données entre ces utilisateurs. Avec ces logiciels, il n'est donc pas possible pour les utilisateurs d'accéder et de visualiser le contenu multimédia partagé sur un autre équipement que celui qu'ils utilisent pour leur communication voix et/ou vidéo.

La bande passante associée à la liaison de données est ainsi partagée entre la communication de type voix et/ou vidéo et le transfert de données multimédia. De ce fait, la qualité de service des transferts impliqués dans la session de communication voix et/ou vidéo n'est pas garantie, notamment en termes de débit, de délai et de taux de perte. Ainsi il est fréquent de constater, lors d'un accès à des données dans le cadre dun partage de données multimédia effectué simultanément avec une communication voix, un délai du flot de parole dans la communication rendant difficile une conversation normale. De même, un manque de synchronisation daffichage des données multimédia entre les correspondants est souvent observé.

US 2004/0233898 décrit un terminal permettant un partage d'informations.

### Objet et résumé de l'invention

Selon un premier aspect, l'invention vise un procédé de télécommunication permettant à au moins deux utilisateurs distincts d'accéder à un même ensemble d'informations et comportant :
- une étape de réception d'une requête émise *via* un premier canal par un premier utilisateur pour accéder à l'ensemble d'informations, cette requête comportant un identifiant du premier utilisateur ; et
- une étape denvoi *via* le premier canal d'un message comportant un identifiant d'un deuxième utilisateur et proposant d'autoriser ce deuxième utilisateur à accéder à l'ensemble d'informations.
Conformément à l'invention, l'identifiant du deuxième utilisateur est issu dune analyse dune communication établie entre les deux utilisateurs *via* un deuxième canal distinct du premier canal, cette communication ayant été détectée au moyen de l'identifiant du premier utilisateur.

Au sens de l'invention, un canal de communication désigne une liaison de données. De façon connue de l'homme du métier, une telle liaison de données est par exemple un canal logique d'un système de communication, tel que par exemple le canal B d'un réseau RNIS ou dans le cas de l'ADSL, l'un des trois canaux permettant respectivement de transporter sur le même support physique la téléphonie, les données de type internet, ou la télévision. De manière générale, il s'agit d'un canal permettant à un utilisateur de transmettre des informations.

Dans un cas particulier, deux utilisateurs en communication téléphonique *via* un terminal téléphonique (par exemple un téléphone mobile) accédant à des données multimédia *via* un terminal multimédia distinct du terminal téléphonique (par exemple un ordinateur PC, Personal Computer) utilisent deux liaisons de données distinctes : une pour la conversation téléphonique et l'autre pour les échanges de données.

Ainsi, le procédé de télécommunication selon l'invention permet à un premier et à un deuxième utilisateur en communication *via un* canal de communication d'accéder à un même ensemble d'informations *via* un autre canal de communication. Suite à la détection de la communication existant entre les deux utilisateurs, l'analyse des paramètres de cette communication permet au procédé selon l'invention d'extraire un identifiant du deuxième utilisateur et de déclencher automatiquement l'envoi dune proposition visant à autoriser ce deuxième utilisateur à accéder à un ensemble informations consulté par le premier utilisateur.

L'invention prévoit de façon avantageuse que l'autorisation d'accéder à l'ensemble d'informations soit proposée au premier utilisateur, c'est-à-dire, à l'utilisateur à l'origine de la requête d'accès à l'ensemble d'informations. Il peut s'agir par exemple du propriétaire de cet ensemble d'informations.

Ainsi, le premier utilisateur n'a pas besoin de configurer lui-même le serveur d'informations ou de lancer une application particulière pour recevoir la proposition visant à autoriser le deuxième utilisateur à accéder à l'ensemble d'informations.

Par ailleurs, avantageusement, le flux des données accédées par les deux utilisateurs ne transite pas par le même canal que le flux des données échangées au cours de la communication entre ces deux utilisateurs. Ceci permet de garantir la qualité de service nécessaire pour les différents flux de données échangés entre les deux utilisateurs (communication et accès aux données).

Selon un deuxième aspect, l'invention vise un procédé de notification comportant :
- une étape de réception dune requête émise par un serveur d'informations pour connaître un état de communication d'un premier utilisateur, cette requête comportant un identifiant du premier utilisateur ;
- au moins une étape d'obtention, depuis une base de données et à l'aide de cet identifiant, dun état de communication du premier utilisateur ; et
- lorsque le premier utilisateur entretient au moins une communication avec au moins un deuxième utilisateur, une étape denvoi vers le serveur d'informations, en réponse à sa requête, d'un message de notification de cette communication comportant un identifiant de ce deuxième utilisateur, déterminé à l'aide de la base de données.

Corrélativement, l'invention vise également un serveur de notification comportant :
- des moyens pour recevoir une requête émise par un serveur d'informations pour connaître un état de communication d'un premier utilisateur, cette requête comportant un identifiant du premier utilisateur ;
- des moyens pour obtenir, depuis une base de données et à l'aide de cet identifiant, un état de communication du premier utilisateur ; et
- des moyens pour envoyer vers le serveur d'informations, en réponse à sa requête, un message de notification d'au moins une communication établie entre le premier utilisateur et au moins un deuxième utilisateur, ce message comportant un identifiant de ce deuxième utilisateur, déterminé à l'aide de la base de données.

Le procédé et le serveur de notification selon l'invention permettent ainsi avantageusement d'informer un serveur d'informations de l'état de communication dun utilisateur. Au sens de l'invention l'« état de communication » de l'utilisateur révèle si l'utilisateur participe ou non à au moins une communication avec au moins un autre utilisateur.

Cet état de communication est mémorisé dans une base de données en association avec l'identifiant de l'utilisateur. Si l'utilisateur est en communication avec un ou plusieurs correspondants, un identifiant de ces correspondants est également mémorisé dans la base de données.

D'autres paramètres peuvent être associés à l'état de communication d'un utilisateur. Ainsi, dans un mode de réalisation particulier de l'invention, ces paramètres peuvent indiquer si une communication est transférée, en cours d'établissement, établie, etc.

Si l'utilisateur participe à des communications distinctes avec différents utilisateurs, la base de données associe à l'état de communication de l'utilisateur ces différentes communications, et à chaque communication est associé l'identifiant du ou des correspondants avec le(s)quel l'utilisateur entretient cette communication. Ainsi, lorsque l'une de ces communications est détectée, le procédé et le serveur de notification selon l'invention envoient au serveur d'informations l'identifiant du correspondant entretenant cette communication avec l'utilisateur. Si plusieurs communications sont détectées simultanément, le procédé et le serveur de notification selon l'invention envoient au serveur d'informations la liste des correspondants participant à ces différentes communications avec l'utilisateur.

Si l'utilisateur participe à une communication en conférence avec un groupe d'utilisateurs, alors un identifiant représentatif du groupe d'utilisateurs est associé dans la base de données à cette communication. Après détection de cette communication, le procédé et le serveur de notification selon l'invention envoient au serveur d'informations l'identifiant du groupe d'utilisateurs participant à cette communication.

Dans un mode particulier de réalisation, le procédé de notification selon l'invention comporte en outre :
- une étape de réception d'un message comportant une notification de l'existence d'une communication entre au moins deux utilisateurs, chaque utilisateur étant associé à un identifiant ; et
- une étape de mise à jour de la base de données avec l'état de communication de chaque utilisateur participant à cette communication, en association avec son identifiant.

Corrélativement, selon un mode particulier de réalisation, le serveur de notification selon l'invention comporte en outre :
- des moyens pour recevoir un message comportant une notification de l'existence d'une communication entre au moins deux utilisateurs, chaque utilisateur étant associé à un identifiant ; et
- des moyens pour mettre à jour la base de données avec l'état de communication de chaque utilisateur participant à cette communication, en association avec son identifiant.

Ainsi, le procédé et le serveur de notification selon l'invention mettent à jour la base de données des états de communication des utilisateurs à l'aide de notifications reçues, par exemple, dun serveur d'application.

Dans un mode particulier de réalisation de l'invention, c'est par ce serveur d'application que transite la signalisation d'appel relative aux communications établies dans le réseau de télécommunications.

Dans un mode particulier de réalisation de l'invention, le serveur de notification souscrit, par exemple auprès d'un serveur d'application tel que précité, aux informations d'état de communication des utilisateurs abonnés aux services proposés par le serveur d'informations. Ceci lui permet avantageusement d'être informé directement par le serveur d'application de tout événement relatif à l'établissement et au changement d'état d'une communication associée à ces utilisateurs.

Dans un mode particulier de réalisation de l'invention, cette souscription se fait selon le mécanisme SIP (Session Initiation Protocol) de souscription/notification décrit dans le document RFC 3265 « Session Initiation Protocol : Special Event Notification » (www.ietf.org/rfc/rfc3265.txt).

En variante, il est possible d'exploiter d'autres mécanismes de notification en lien avec le système d'information de l'opérateur du service de télécommunication par exemple.

Dans un mode particulier de réalisation de l'invention le serveur de notification se trouve dans le serveur d'application.

Selon un troisième aspect, l'invention vise un serveur d'informations comportant :
- des moyens pour recevoir une requête émise *via* un premier canal par un premier utilisateur pour accéder à un ensemble d'informations, cette requête comportant un identifiant du premier utilisateur ;
- des moyens pour connaître un état de communication du premier utilisateur à l'aide de cet identifiant ;
- des moyens pour recevoir un message de notification dune communication établie *via* un deuxième canal entre ledit premier utilisateur et au moins un deuxième utilisateur ; ce message de notification comporte un identifiant de ce deuxième utilisateur, déterminé à l'aide de l'identifiant du premier utilisateur ; et
- des moyens pour envoyer *via* le premier canal un message comportant cet identifiant du deuxième utilisateur et proposant d'autoriser ce deuxième utilisateur à accéder à l'ensemble d'informations.

Lorsqu'un utilisateur accède à un ensemble d'informations hébergé par le serveur d'informations, celui-ci dispose de moyens pour savoir si cet utilisateur entretient ou non une communication avec un autre utilisateur. Cette communication peut être établie avantageusement sur un canal de communication distinct de celui que l'utilisateur utilise pour accéder au serveur d'informations. Si l'utilisateur est en communication lors de la consultation de l'ensemble d'informations, alors le serveur d'informations selon l'invention lui propose d'autoriser son correspondant à accéder à cet ensemble d'informations, et ce par exemple en vue de partager des informations.

Ceci se fait de manière transparente pour l'utilisateur accédant au serveur d'informations, c'est-à-dire qu'il n'a pas besoin de configurer un logiciel particulier avec l'identifiant de son correspondant pour se voir proposer cette autorisation d'accès.

Dans un mode particulier de réalisation de l'invention, pour connaître l'état de communication de l'utilisateur lui ayant adressé une requête d'accès, le serveur d'informations souscrit aux informations d'état de communication de cet utilisateur auprès dun serveur de notification selon l'invention.

Dans un mode particulier de réalisation de l'invention, cette souscription se fait selon le mécanisme SIP (Session Initiation Protocol) de souscription/notification décrit dans le document RFC 3265 « Session Initiation Protocol : Special Event Notification » (www.ietf.org/rfc/rfc3265.txt).

Selon un quatrième aspect, l'invention vise un système de télécommunication permettant à au moins deux utilisateurs distincts d'accéder à un même ensemble d'informations et comportant :
- un serveur de notification selon l'invention ; et
- un serveur d'informations selon l'invention.

Selon un mode particulier de réalisation, le système de télécommunication selon l'invention comporte en outre un serveur d'application apte à :
- détecter l'existence d'une communication établie entre au moins deux utilisateurs *via* un canal d'un réseau de télécommunications ; et à
- envoyer au serveur de notification selon l'invention un message comportant une notification de l'existence de cette communication et des identifiants des utilisateurs participant à la communication.

Ainsi, toute communication détectée par le serveur d'application du système selon l'invention est enregistrée dans une base de données. Cette base de données est consultée par le serveur de notification qui informe le serveur d'informations selon l'invention qu'un utilisateur lui ayant envoyé une requête est en communication avec un correspondant. Le serveur d'informations propose alors à l'utilisateur d'autoriser l'accès à ses données ou à ses applications à ce correspondant.

Selon une implémentation particulière de l'invention, les différentes étapes du procédé de télécommunication et du procédé de notification selon l'invention sont déterminées par des instructions de programmes d'ordinateur.

En conséquence, l'invention vise également un programme d'ordinateur sur un support d'informations, ce programme étant susceptible d'être mis en oeuvre dans un serveur d'informations selon l'invention ou plus généralement dans un ordinateur, ce programme comportant des instructions adaptées à la mise en oeuvre des étapes d'un procédé de télécommunication tel que décrit ci-dessus.

L'invention vise également un programme sur un support d'informations, ce programme étant susceptible d'être mis en oeuvre dans un serveur de notification selon l'invention ou plus généralement dans un ordinateur, ce programme comportant des instructions adaptées à la mise en oeuvre des étapes d'un procédé de notification tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de télécommunication conforme à l'invention dans un mode particulier de réalisation ;
- la figure 2 représente, sous forme d'organigramme, les principales étapes d'un procédé de télécommunication conforme à l'invention, dans un mode particulier de réalisation, lorsqu'il est mis en oeuvre dans un serveur d'informations selon l'invention ; et
- la figure 3 représente, sous forme d'organigramme, les principales étapes d'un procédé de notification conforme à l'invention dans un mode particulier de réalisation.

### Description détaillée de plusieurs modes de réalisation

Les modes de réalisation de l'invention décrits ci-après s'inscrivent dans un contexte de partage d'informations entre plusieurs utilisateurs, dans lequel chaque utilisateur possède des données hébergées sur un même serveur d'informations et autorise l'accès aux autres utilisateurs à ces données. Cette hypothèse n'est en aucun cas limitative. On pourrait tout aussi bien considérer, dans un autre mode de réalisation, que seul un utilisateur autorise l'accès à ses données par les autres utilisateurs, ceux-ci ne disposant pas nécessairement de données sur le serveur d'informations.

Comme décrit précédemment, l'invention vise un procédé de télécommunication permettant à au moins deux utilisateurs distincts d'accéder à un même ensemble d'informations, ces deux utilisateurs entretenant par ailleurs une communication indépendamment de cet accès. Cette communication a lieu *via* un canal de communication différent du canal utilisé pour l'accès à l'ensemble d'informations par les utilisateurs. Ceci permet de garantir la qualité de service de la communication entre les utilisateurs ainsi que celle de l'accès à l'ensemble d'informations par ces mêmes utilisateurs.

Le procédé de télécommunication selon l'invention comporte notamment les trois étapes suivantes :
- une étape au cours de laquelle une requête d'accès à un ensemble d'informations est reçue dun utilisateur *via* un premier canal de communication ; cette requête comporte un identifiant de l'utilisateur ;
- une étape au cours de laquelle, à l'aide de cet identifiant, une communication entre cet utilisateur et au moins un correspondant est détectée et analysée ; et
- une étape au cours de laquelle on propose à l'utilisateur d'autoriser son correspondant à accéder à l'ensemble d'informations qu'il consulte, ce correspondant étant associé à un identifiant.

Dans les descriptions qui suivent, les communications établies entre les utilisateurs sont des communications de type voix. Les utilisateurs échangent une conversation téléphonique, *via* n'importe quel type de terminal (téléphone fixe ou mobile,.) au moment de l'accès précité. Les informations auxquelles les utilisateurs souhaitent accéder et qu'ils souhaitent partager sont des données de type multimédia, que les utilisateurs ont téléchargées sur un serveur d'informations.

Ces exemples de réalisation sont dépourvus de tout caractère limitatif, les utilisateurs pouvant par exemple indifféremment participer à une session de messagerie instantanée *via* leurs téléphones mobiles et accéder à tout autre type d'informations ou de données, comme des films vidéo, des bandes audio... ou des applications.

Par ailleurs, dans les descriptions qui suivent, les communications et les accès aux ensembles d'informations sont mis en oeuvre entre deux utilisateurs. Ce mode particulier de réalisation est dépourvu de tout caractère limitatif, l'invention pouvant être en effet mise en oeuvre entre un nombre K quelconque d'utilisateurs, K ≥ 2. Les utilisateurs peuvent participer indifféremment à des communications distinctes (chaque communication distincte est par exemple établie entre deux utilisateurs, un même utilisateur pouvant participer à différentes communications) ou à des communications dites en conférence, au cours desquelles différents utilisateurs participent à une même communication.

De manière générale, chaque utilisateur U est identifié sur le réseau de télécommunication, par au moins un identifiant ID.

Dans les modes de réalisation décrits ici, cet identifiant ID est unique, quelle que soit l'application requise par l'utilisateur, c'est-à-dire qu'il s'agisse d'une application de type voix (conversation téléphonique par exemple) ou de type données (accès à un serveur d'informations ou de données par exemple).

Afin de permettre cette identification unique d'un utilisateur, un serveur mettant en oeuvre une procédure d'authentification unique SSO (Single Sign-On) connue de l'homme du métier peut être utilisé dans le réseau de télécommunications. Par exemple il peut s'agir dun serveur WISP (Wireless Internet Service Provider) SSO.

Dans un autre mode particulier de réalisation, l'utilisateur U est identifié sur le réseau à l'aide didentifiants distincts selon le service qu'il requiert. Ainsi il peut être identifié par exemple à l'aide un identifiant I lorsqu'il établit une communication de type voix dans le réseau et un identifiant J lorsqu'il se connecte à un serveur d'informations. Cet identifiant peut ou non être lié à l'équipement par lequel l'utilisateur se connecte au réseau (I par exemple pour son téléphone mobile, J pour son ordinateur PC).

Dans ce cas, le réseau de télécommunications considéré dans l'invention est équipé d'une base de données ou d'un serveur permettant de mettre en correspondance ces identifiants I et J avec l'utilisateur U. Ainsi un serveur ayant accès à cette base de données ou ce serveur pourra aisément attribuer différents identifiants à un même utilisateur ou à l'aide d'un identifiant d'un utilisateur retrouver un autre identifiant de cet utilisateur.

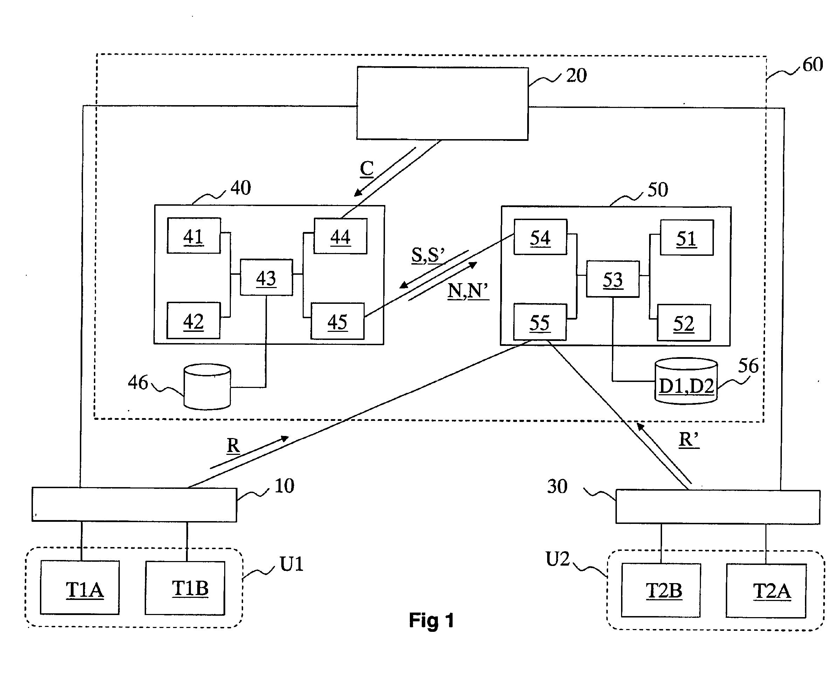

La figure 1 représente un système 60 de télécommunication conforme à l'invention, dans son environnement.

Dans l'exemple décrit ici, nous considérons deux utilisateurs U1 et U2 échangeant une communication téléphonique *via* leurs terminaux respectifs T1A et T2A. Les terminaux T1A et T2A ne possèdent pas nécessairement de fonctionnalités multimédia.

Dans le mode particulier de réalisation décrit ici, T1A et T2A sont des téléphones fixes. La communication téléphonique établie entre les utilisateurs U1 et U2 se fait par l'intermédiaire d'un premier canal de communication du réseau de télécommunication, dédié à la téléphonie.

Les deux utilisateurs U1 et U2 disposent également de deux terminaux dits « multimédia », T1B et T2B, adaptés à émettre et/ou recevoir des données de type multimédia et permettant de visualiser les contenus des données multimédia. A cette fin, les terminaux T1 B et T2B sont équipés d'un écran. Dans l'exemple décrit ici T1B et T2B sont des ordinateurs PC (Personal Computer).

Dans l'exemple décrit ici, ces terminaux peuvent accéder au réseau de télécommunication via une ligne ADSL. Les données multimédia envoyées et reçues par ces terminaux empruntent le même support physique que la téléphonie, mais un canal « logique » différent. De façon connue de l'homme du métier, les boitiers 10 et 30 représentés sur la figure 1 sont des passerelles résidentielles qui permettent d'orienter chaque flux (téléphonie ou données dans l'exemple décrit ici) sur un canal différent. Ces boitiers présentent par exemple des schémas de connexion (prises) différents pour l'ordinateur PC et le téléphone.

Dans un autre mode de réalisation particulier de l'invention, l'un au moins des utilisateurs disposent de deux équipements ou terminaux distincts T1A, T1B, ou d'un équipement ou terminal unique T1 mais permettant d'accéder à deux canaux de communication distincts au sens de l'invention.

L'utilisation de deux liaisons de données ou canaux de communication distincts dune part pour échanger des communications de type voix/vidéo et d'autre part pour accéder à des données multimédia permet avantageusement de garantir aux utilisateurs la qualité de service requise pour ces deux services.

Dans le mode de réalisation décrit ici, le système de télécommunication 60 selon l'invention comporte :
- un serveur 20 d'application conforme à l'invention ;
- un serveur de notification 40 conforme à l'invention ; et
- un serveur 50 d'informations conforme à l'invention, pouvant accéder à des ensembles d'informations D1 et D2 constitués ici de données multimédia et appartenant respectivement aux utilisateurs U1 et U2.

Dans l'exemple décrit ici, ces ensembles de données multimédia D1 et D2 sont stockées dans une base de données multimédia 56 du serveur 50 d'informations.

Dans le mode de réalisation particulier de l'invention décrit ici, le serveur 20 d'application est déployé dans un réseau coeur IMS (IP Multimedia Subsystem). Larchitecture IMS est définie dans différents documents du standard 3GPP (http://www.3gpp.org/specs/).

Un tel serveur d'application est connu de l'homme du métier. Il communique via une interface SIP (Session Initiation Protocol) avec le serveur S-CSCF (Serving Call Session Control Function) du réseau coeur IMS, en charge d'établir par exemple une communication entre deux utilisateurs.

Pour toute communication établie entre les utilisateurs U1 et U2, *via* leurs terminaux respectifs T1A et T2A, la signalisation d'appel relatif à cette communication passe par le serveur 20 d'application, ce qui lui permet de détecter la communication entre les utilisateurs U1 et U2.

Ce serveur 20 d'application comporte en outre des moyens pour notifier au serveur 40 de notification l'existence de cette communication (*via* un message C) et lui envoyer les identifiants des utilisateurs participant à cette communication. Dans l'exemple décrit ici, une fois la communication téléphonique établie entre U1 et U2, le serveur 20 d'application envoie au serveur 40 de notification les identifiants ID1 et ID2 des utilisateurs U1 et U2 respectivement.

En variante, l'utilisateur U1 établit une communication dite en conférence avec K utilisateurs, K>2. Cette communication passe par le serveur 20 d'application, qui notifie son existence au serveur 40 de notification. Le message de notification C comporte également un identifiant de groupe désignant le groupe de K utilisateurs.

Dans l'exemple décrit ici, le serveur 40 de notification souscrit aux informations d'état de communication des utilisateurs dépendant du serveur 20 d'application et étant abonnés aux services hébergés par le serveur 50 d'informations (par exemple service d'accès à des données, application hébergée par le serveur,.). Cette souscription lui permet d'être informé de tout événement relatif à l'établissement et au changement d'état d'une communication impliquant ces utilisateurs. Elle se fait ici selon le mécanisme SIP (Session Initiation Protocol) de souscription/notification décrit dans le document IETF, RFC 3265 « Session Initiation Protocol : Special Event Notification » (www.ietf.org/rfc/rfc3265.txt).

En variante, d'autres mécanismes de notification peuvent être utilisés en lien par exemple avec le système d'information de l'opérateur du réseau de télécommunication.

Dans un autre mode de réalisation particulier de l'invention, le serveur 40 de notification est inclus dans le serveur 20 d'application.

Comme décrit précédemment, le réseau de télécommunication est équipé d'un serveur d'identification, non représenté sur la figure, permettant une identification unique de l'utilisateur, quel que soit le service accédé sur le réseau (voix ou multimédia).

Dans un autre mode de réalisation particulier de l'invention, le réseau de communication permettant à l'utilisateur d'accéder aux données multimédia d'une part et le réseau de communication permettant audit utilisateur d'accéder à une communication de type voix d'autre part sont opérés par des opérateurs différents. Dans ce cas particulier, une passerelle entre les deux opérateurs peut être mise en place afin de permettre le partage des données d'identification et d'état de communication des utilisateurs. Une telle passerelle permet de mettre en correspondance les différents identifiants des utilisateurs utilisés sur chaque réseau.

Le serveur de notification 40 a l'architecture matérielle d'un ordinateur. Il comporte un processeur 43, une mémoire vive 42, une mémoire morte 41, des moyens de communication 44 avec le serveur 20 d'application et des moyens de communication 45 avec le serveur 50 d'informations. Il comporte par ailleurs des moyens pour accéder à une base de données 46 contenant des informations sur l'état de communication des utilisateurs.

La consultation de la base de données 46 par le serveur 40 de notification s'effectue selon des moyens classiques de consultation dune base de données connus de l'homme du métier. Cette consultation permet ainsi au serveur 40 de notification de déterminer si un utilisateur est en communication, et le cas échéant un identifiant du ou des correspondants de l'utilisateur participant à cette communication. Cette base de données 46 est mise à jour par le serveur 40 de notification à l'aide des informations de communication reçues du serveur 20 d'application.

Dans l'exemple décrit ici, on suppose que, dans la base de données 46, plusieurs champs sont associés à un utilisateur dont notamment :
- l'état de communication de l'utilisateur, pouvant prendre les valeurs « en communication » ou « pas en communication » ;
- si l'état associé à l'utilisateur est « en communication », un identifiant de chaque participant à cette communication autre que l'utilisateur considéré. En variante, d'autres paramètres peuvent être associés également à cette communication dans la base de données 46, comme par exemple, un identifiant de la communication, sa durée, son coût, son état (par exemple « en cours d'établissement », « transférée », «en cours», « terminée »)..

Dans l'exemple décrit ici, on considère que les utilisateurs U1 et U2 ne participent qu'à une seule communication simultanément avec un autre utilisateur. Cependant, dans un autre mode de réalisation de l'invention dans lequel un utilisateur participe à plusieurs communications simultanées, la base de données peut comprendre, pour chaque communication, un identifiant de cette communication, son état, et les identifiants des correspondants participant à cette communication. L'état de communication de l'utilisateur constitue alors un état « général » de communication, qui prend la valeur « en communication » dés lors qu'une communication existe (au moins une communication avec un état de type « en cours » par exemple) et « pas en communication » lorsque toutes les communications sont achevées (toutes les communications avec un état de type «terminée ») ou qu'aucune communication ne lui est associée.

Dans l'exemple décrit ici, lorsqu'une communication impliquant un utilisateur est achevée, les paramètres (identifiant, participants,.) relatifs à cette communication sont conservés dans la base de données et l'état de communication de l'utilisateur est mis à jour pour prendre la valeur « pas en communication ».

En variante, selon les contraintes d'exploitation du système, certaines informations associées à un utilisateur ou à une communication dans la base de données 46 peuvent disparaître. Ainsi, par exemple, une communication achevée peut être effacée de la base de données ainsi que l'entrée correspondant à l'utilisateur lorsque celui-ci n'est plus en communication. Si l'identifiant d'un utilisateur n'est pas compris dans la base de données, on considérera alors que l'utilisateur ne participe à aucune communication.

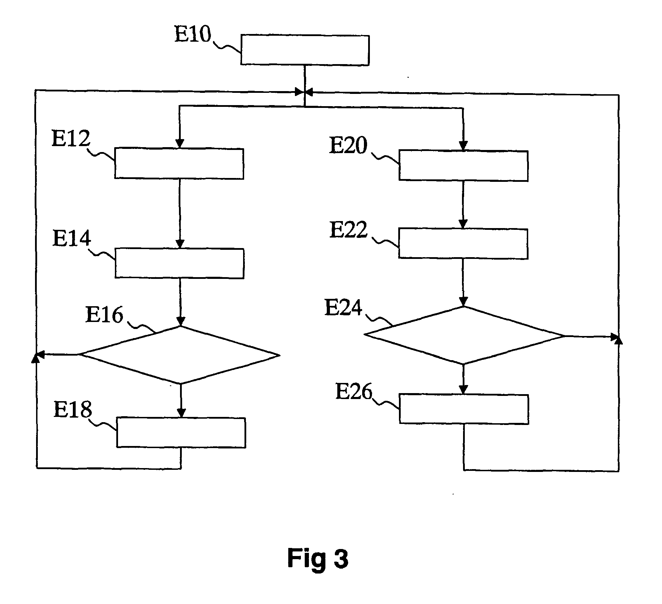

La mémoire morte 41 du serveur 40 de notification décrit ici comporte un programme informatique adapté à exécuter les principales étapes du procédé de notification selon l'invention, ces principales étapes étant représentées sous la forme dun organigramme sur la figure 3 décrite ultérieurement.

Le serveur 50 d'informations est localisé dans un réseau multimédia, par exemple Internet. Les utilisateurs U1 et U2 accèdent à ce réseau *via* le réseau de télécommunications.

Le serveur 50 d'informations a l'architecture matérielle dun ordinateur. Il comporte un processeur 53, une mémoire vive 52, une mémoire morte 51, des moyens de communication 54 avec le serveur de notification 40 et des moyens de communication 55 avec les utilisateurs U1 et U2 *via* les passerelles résidentielles 10 et 30.

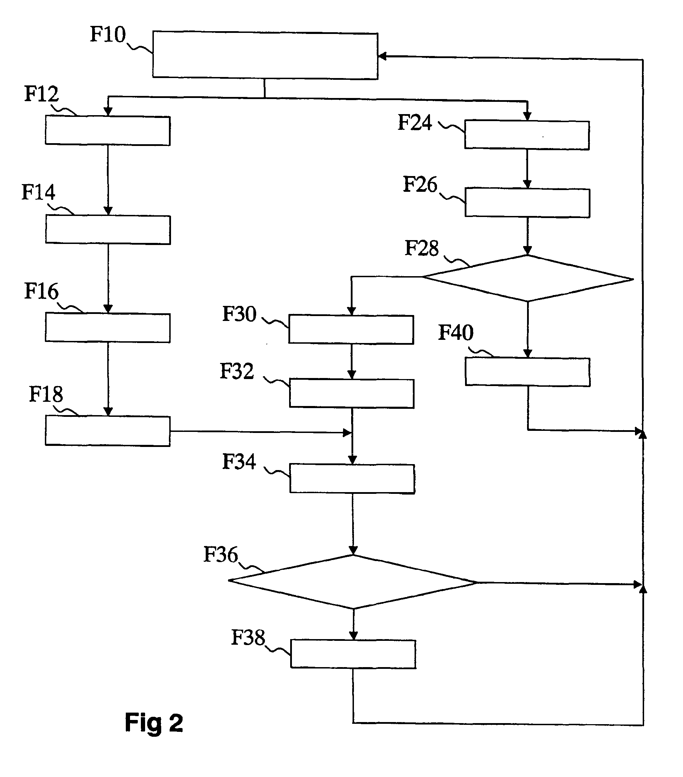

La mémoire morte 51 du serveur 50 d'informations décrit ici comporte un programme informatique adapté à exécuter les principales étapes du procédé de télécommunication selon l'invention, ces principales étapes étant représentées sous la forme d'un organigramme sur la figure 2.

Nous allons maintenant décrire en référence aux figures 2 et 3 un mécanisme de partage de données entre deux utilisateurs U1 et U2. Ce mécanisme met en oeuvre un procédé de notification et un procédé de télécommunication conformes à l'invention.

Deux modes de réalisation particuliers de l'invention sont décrits :
- mode de réalisation 1 : une communication est établie entre les utilisateurs U1 et U2 avant que l'utilisateur U1 n'accède au serveur 50 d'informations. C'est le cas par exemple lorsque la consultation et le partage d'informations n'avaient pas été anticipés par les utilisateurs ;
- mode de réalisation 2 : l'utilisateur U1 accède au serveur 50 d'informations avant d'établir une communication avec l'utilisateur U2. Les données de l'utilisateur U1 seront ensuite partagées avec l'utilisateur U2 pendant la communication établies entre les deux utilisateurs.

Dans les deux modes de réalisation décrits ici, on suppose que la signalisation d'appel pour les services de communication dans le réseau est conforme au protocole SIP. Au cours dune étape E10, le serveur 40 de notification souscrit auprès du serveur 20 d'application aux informations concernant tout événement de type état d'appel associé aux utilisateurs U1 et U2, selon le principe de souscription/notification décrit dans le document RFC 3265 de l'IETF précédemment cité.

### Mode de réalisation 1 :

On suppose que l'utilisateur U1 utilise son terminal de communication (téléphone) T1A pour appeler l'utilisateur U2 sur son téléphone T2A. Cette communication est établie *via* un premier canal de communication du réseau de télécommunication, dédié à la téléphonie.

Comme vu précédemment, la signalisation de la communication passe par le serveur 20 d'application dans le réseau de télécommunication. Sur détection de cette communication, le serveur 20 d'application envoie au serveur 40 de notification un message C comportant une notification de l'existence de cette communication sur un canal du réseau de télécommunication. Ce message C comporte en outre un identifiant des utilisateurs participant à cette communication. Il est reçu par le serveur 40 de notification au cours d'une étape E12.

Au cours d'une étape E14, le serveur 40 de notification met à jour la base de données 46 à l'aide des informations contenues dans le message C, c'est-à-dire :
- si les utilisateurs dont les identifiants sont compris dans le message C existent déjà dans la base de données 46, le serveur 40 de notification met à jour leur état de communication ainsi que la liste des identifiants des utilisateurs avec lesquels ils sont en communication ;
- si les utilisateurs dont les identifiants sont compris dans le message C ne sont pas dans la base de données 46, le serveur 40 de notification crée une nouvelle entrée dans cette base de données pour chaque nouvel utilisateur et lui associe un état « en communication » ainsi que les identifiants des utilisateurs avec lesquels il est en communication.

Au cours dune étape E16, le serveur 40 de notification vérifie alors, dans une base de données non représentée sur la figure 1, si un serveur d'informations est abonné aux informations d'état de communication d'au moins un des utilisateurs participant à la communication (ici U1 ou U2).

Dans l'exemple décrit ici, aucun serveur d'informations n'a souscrit aux informations d'état de communication des utilisateurs U1 ou U2. Le serveur 40 de notification passe dans un état d'attente dune nouvelle notification de communication du serveur 20 d'application ou dune souscription dun serveur d'informations.

Au cours dune étape F10, le serveur 50 d'informations est en attente dune requête dun utilisateur ou dun message de notification dun serveur de notification.

On suppose alors que l'utilisateur U1 utilise son ordinateur PC T1B, pour accéder à des données D1 lui appartenant et hébergées par le serveur 50 d'informations. Ces données D1 sont localisées dans une base de données 56 du serveur 50 d'informations. La requête d'accès R envoyée par l'ordinateur T1 B au serveur 50 d'informations transite *via* un deuxième canal du réseau de télécommunications, dédié aux données, distinct du premier canal.

Sur réception de cette requête R au cours d'une étape F24, le serveur 50 d'informations souscrit auprès du serveur 40 de notification aux informations d'état de communication de l'utilisateur U1 au cours dune étape F26. L'identification du serveur 40 de notification comme étant le serveur possédant les informations d'état de communication de l'utilisateur U1 a été réalisée en amont, selon des techniques connues de l'homme du métier.

Comme décrit précédemment, la signalisation d'appel sur le service de communication est conforme ici au protocole SIP (Session Initiation Protocol). Le serveur 50 d'informations souscrit aux informations d'état de communication de l'utilisateur U1 selon les principes décrits dans le document RFC 3265 de l'IETF, cité précédemment.

De façon connue de l'homme du métier, la souscription à un événement selon le protocole SIP requiert la définition dun package contenant les informations échangées lors des messages de notifications. Ainsi conformément au document RFC 3265, il est nécessaire de définir ici :
- un nom de package, par exemple ici, « état_de_communication » ;
- les contenus des corps des messages, par exemple ici, au moins :
   o identifiant de l'abonné (ici identifiant ID1 de l'utilisateur U1) ;
   o identifiant du ou des correspondants (ici, identifiant ID2 de l'utilisateur U2) ;
   o état de communication de l'abonné (ou en variante état de la communication entre l'abonné et le ou les correspondants par exemple lorsque l'abonné participe à plusieurs communications).

Les informations contenues dans ce package sont similaires aux informations utilisées par exemple dans le cadre dun procédé de facturation d'appel. Par conséquent, les mécanismes liés à la facturation ou à tout autre procédé utilisant le même type d'information peuvent être considérés en variante par le serveur d'informations 50 ou le serveur 40 de notification pour obtenir ces informations.

La demande S de souscription du serveur 50 d'informations est reçue par le serveur 40 de notification au cours dune étape E20. Elle contient notamment un identifiant ID1 de l'utilisateur U1.

Le serveur 40 de notification consulte la base de données 46 pour obtenir l'état de communication de l'utilisateur U1 à l'aide de l'identifiant ID1 au cours d'une étape E22. Deux cas peuvent alors se présenter (étape E24) :
(1) l'utilisateur U1 n'est pas dans la base de données 46 ou se trouve dans la base de données 46 mais son état de communication révèle qu'il n'est pas en communication avec un autre utilisateur ;
(2) l'utilisateur U1 se trouve dans la base de données 46 et son état de communication révèle qu'il est en communication. Une analyse des paramètres associés à cette communication dans la base de données 46 montre que la communication est établie avec l'utilisateur U2 identifié par l'identifiant ID2.

Dans le cas (1), le serveur 40 de notification ne transmet aucun message au serveur 50 d'informations et retourne dans un état d'attente dune nouvelle notification de communication du serveur 20 d'application ou dune nouvelle souscription d'un serveur d'informations. Le serveur 50 d'informations n'ayant reçu aucune notification de communication relative à l'utilisateur U1 au cours d'un temps T paramétrable suivant l'envoi de la requête S de souscription auprès du serveur 40 de notification (étape F28), envoie une page d'accueil simple à l'utilisateur U1, au cours d'une étape F40, afin que celui-ci puisse accéder à ses données D1. Dans l'exemple décrit ici, T est particulièrement court afin que l'utilisateur ne soit pas dérangé par le mécanisme de souscription/notification et de consultation de la base de données 46 mis en oeuvre dans l'invention.

Dans l'exemple décrit ici, la base de données 46 indique que l'utilisateur U1, identifié par ID1, est en communication avec l'utilisateur U2, identifié par ID2. Ceci correspond au cas (2) mentionné ci-dessus.

Dans le cas (2), après détection de la communication entre les utilisateurs U1 et U2 dans la base de données 46, le serveur 40 de notification envoie immédiatement au serveur 50 d'informations un message N de notification de cette communication, au cours dune étape E26. Ce message N comporte un identifiant ID2 de l'utilisateur U2 et respecte les caractéristiques du package «etat_de_communication» décrit précédemment. Cet identifiant ID2 est obtenu en consultant la base de données 46 et en analysant les paramètres de la communication à laquelle U1 participe (en particulier ici, les identifiants des correspondants de l'utilisateur U1 dans cette communication).

Le serveur 50 d'informations reçoit alors le message N de notification du serveur 40 de notification au cours dune étape F28.

Sur réception de cette notification, le serveur 50 d'informations prépare un message, destiné ici à l'utilisateur U1, proposant d'autoriser l'utilisateur U2 identifié dans ce message par l'identifiant ID2, à accéder aux données D1 de l'utilisateur U1, en vue d'un partage des données D1 entre les deux utilisateurs. Ce message prend la forme ici d'une page d'accueil personnalisée.

Ainsi, au cours d'une étape F30, le serveur 50 d'informations personnalise la page d'accueil de l'utilisateur U1 afin que celui-ci soit en mesure de partager ses données multimédia D1 avec l'utilisateur U2. Cette page d'accueil comporte la proposition précitée. Dans l'exemple décrit ici, cette proposition prend la forme d'une proposition de partage des données multimédia D1 de l'utilisateur U1 avec l'utilisateur U2.

En variante, l'utilisateur U2 est identifié sur la page d'accueil par un identifiant distinct de ID2, par exemple un nom ou un prénom ou une adresse mél désignant l'utilisateur U2. Cet identifiant est obtenu en consultant un serveur ou une base de données établissant la correspondance entre cet identifiant et ID2.

Dans un autre mode de réalisation de l'invention, l'utilisateur U1 participe simultanément à des communications distinctes avec plusieurs utilisateurs U2, U3,.. La page d'accueil comporte, pour chaque communication détectée par le serveur 50 d'informations, une proposition visant à autoriser l'accès, à chacun des utilisateurs U2, U3,.. aux données multimédia D1.

Cette page d'accueil est alors envoyée au cours d'une étape F32 à l'utilisateur U1, qui est libre d'accepter ou non la proposition d'autorisation d'accès à U2 aux données D1 qui lui est faite sur cette page d'accueil. Cette page d'accueil est un message envoyé à l'utilisateur U1 par le serveur 50 d'informations *via* le canal de communication dédié aux données.

L'utilisateur U1 voit alors s'afficher sur l'écran de son ordinateur PC T1B la page d'accueil du serveur 50 d'informations auquel il a envoyé une requête daccès R. Sur cette page d'accueil apparaît la proposition précitée (par exemple sous la forme « Voulez-vous partager vos données D1 avec ID2 ?», ou «Autorisez-vous ID2 à accéder à vos données D1 ?»). On suppose que l'utilisateur U1 accepte d'autoriser l'utilisateur U2 à accéder à ses données D1.

Dans un autre mode de réalisation particulier où l'utilisateur U1 participe simultanément à plusieurs communications distinctes, il peut accepter l'accès à ses données D1 par certains utilisateurs et refuser la proposition d'accès à ses données D1 par d'autres utilisateurs.

Le serveur 50 d'informations reçoit la réponse de l'utilisateur U1 à la proposition au cours d'une étape F34. Il mémorise cette réponse dans une base de données de partage non représentée sur la figure 1.

Au cours dune étape F36, il vérifie dans cette même base de données de partage si l'utilisateur U1 ainsi que tous ses correspondants (ici l'utilisateur U2) se sont autorisés mutuellement l'accès à leurs données respectives (*i.e*., les données des utilisateurs hébergées sur le serveur 50 d'informations dans la base de données 56). Cette base de données de partage indique au serveur 50 dinformations que l'utilisateur U2 n'a pas autorisé l'utilisateur U1 à accéder à ses données D2. Le serveur 50 d'informations retourne ainsi dans l'état F10 d'attente dune nouvelle requête d'un utilisateur ou dune notification du serveur 40 de notification.

On suppose qu'à son tour, l'utilisateur U2, en communication avec l'utilisateur U1 sur le premier canal de communication *via* son terminal T2A, lance une requête d'accès R au serveur 50 d'informations pour accéder à des données D2 lui appartenant et hébergées par le serveur 50 d'informations. Il envoie cette requête d'accès R *via* son ordinateur PC T2B, c'est-à-dire *via* le deuxième canal de communication. Comme décrit précédemment, le premier canal, respectivement le deuxième canal, est dédié aux échanges téléphoniques, respectivement aux échanges de données.

Le serveur 50 d'informations reçoit la requête d'accès R de l'utilisateur U2 au cours de l'étape F24. Cette requête R contient un identifiant ID2 de l'utilisateur U2.

Comme décrit précédemment pour l'utilisateur U1 :
- le serveur 50 d'informations souscrit aux informations d'état de communication de l'utilisateur U2 auprès du serveur 40 de notification, au cours de l'étape F26 de souscription. La requête S de souscription envoyée par le serveur 50 d'informations contient un identifiant ID2 de l'utilisateur U2 ;
- sur réception de cette requête de souscription au cours de l'étape E20, le serveur 40 de notification consulte la base de données 46 pour obtenir l'état de communication de l'utilisateur U2 à l'aide de l'identifiant ID2 au cours de l'étape E22 ;
- la base de données 46 indique que l'utilisateur U2, identifié par ID2, est en communication avec l'utilisateur U1, identifié par ID1 au cours de l'étape E24 ;
- le serveur 40 de notification envoie immédiatement au serveur 50 d'informations un message N de notification de cette communication au cours de l'étape denvoi E26. Ce message contient un identifiant ID1 de l'utilisateur U1 ;
- le serveur 50 d'informations reçoit le message N de notification du serveur 40 de notification au cours de l'étape F28, personnalise la page d'accueil de l'utilisateur U2 au cours de l'étape F30 et envoie cette page d'accueil à l'utilisateur U2 au cours de l'étape F32 sur le deuxième canal de communication. Cette page d'accueil est un message envoyé par le serveur 50 d'informations à l'utilisateur U2, comportant une proposition pour autoriser l'utilisateur U1, identifié par ID1, à accéder aux données D2. Dans l'exemple décrit ici, cette proposition prend la forme d'une proposition de partage des données multimédia D2 de l'utilisateur U2 avec l'utilisateur U1.

L'utilisateur U2 voit alors s'afficher sur l'écran de son ordinateur PC T2B la page d'accueil du serveur 50 d'informations auquel il a envoyé une requête d'accès R. Sur cette page d'accueil apparaît la proposition précitée. On suppose que l'utilisateur U2 accepte la proposition d'autorisation afin de partager ses données D2 avec l'utilisateur U1.

Sur réception de cette acceptation au cours de l'étape F34, le serveur 50 d'informations mémorise cette réponse dans la base de données de partage.

Il consulte alors, au cours de l'étape F36, cette même base de données pour vérifier si tous les utilisateurs en communication avec l'utilisateur U2 (ici l'utilisateur U1) et l'utilisateur U2 lui-même ont autorisé leurs correspondants respectifs (ici U2 et U1) à accéder à leurs données multimédia (D1, respectivement D2).

D'après la base de données de partage, les utilisateurs U1 et U2 se sont tous les deux mutuellement autorisés l'accès à leurs données respectives D1 et D2. Au cours d'une étape F38, le serveur 50 d'informations met alors en place le partage de données entre les utilisateurs U1 et U2, par des techniques connues de l'homme du métier. Ces techniques sont celles utilisées par exemple par le logiciel Orange Link™ cité précédemment.

### Mode de réalisation 2 :

L'utilisateur U1 utilise son ordinateur PC T1B pour consulter des données multimédia D1 hébergés sur le serveur 50 d'informations.

Sur réception (étape F24) d'une requête R d'accès envoyée par l'utilisateur U1 *via* le deuxième canal de communication, le serveur 50 d'informations souscrit auprès du serveur 40 de notification aux informations d'état de communication de l'utilisateur U1 au cours d'une étape F26.

Les mécanismes de souscription/notification mis en place entre le serveur 40 de notification et le serveur 20 d'application dune part, et entre le serveur 50 d'informations et le serveur 40 de notification d'autre part, sont identiques aux mécanismes de souscription/notification décrits dans le mode de réalisation 1.

Le serveur 40 de notification reçoit au cours d'une étape E20 la requête S de souscription du serveur 50 d'informations. Cette requête contient l'identifiant ID1 de l'utilisateur U1.

Au cours d'une étape E22, le serveur 40 de notification consulte dans la base de données 46 l'état de communication de l'utilisateur U1 à l'aide de l'identifiant ID1, et vérifie au cours de l'étape E24 si l'utilisateur U1 est en communication.

L'utilisateur U1 n'étant pas en communication (résultat du test E24), le serveur 40 de notification n'envoie aucune notification de communication au serveur 50 dinformations et se place en attente d'un nouveau message du serveur 20 d'application ou du serveur 50 d'informations.

Comme décrit dans le mode de réalisation 1, le serveur 50 d'informations ne recevant aucune notification du serveur 40 de notification dans un intervalle de temps T suivant l'envoi de sa requête S, envoie au cours d'une étape F40 une page d'accueil simple à l'utilisateur U1. Cette page d'accueil ne comporte aucune proposition pour autoriser un autre utilisateur à accéder aux données D1.

On suppose alors que l'utilisateur U1 utilise son terminal de communication T1A pour appeler l'utilisateur U2. Le canal de communication par lequel transite cette communication est distinct du canal de communication emprunté par les données multimédia, en particulier par la requête R au serveur 50 d'informations ou les données D1 auxquelles accède l'utilisateur U1 sur le serveur 50 d'informations. Il s'agit du premier canal de communication mentionné précédemment.

Comme décrit précédemment pour le mode de réalisation 1, la signalisation de cette communication passe par le serveur 20 d'application. Sur détection de cette communication, le serveur 20 d'application notifie au serveur 40 de notification l'existence de la communication par un message C comportant les identifiants (ici ID1 et ID2) des utilisateurs (ici U1 et U2) participant à cette communication.

Les étapes E12 de réception de cette notification et des identifiants des utilisateurs participant à cette communication, et E14 de mise à jour de la base de données 46 sont identiques à celles décrites précédemment dans le mode de réalisation 1.

Au cours de l'étape E16, le serveur 40 de notification vérifie dans une base de données non représentée sur la figure 1 si un serveur d'informations a souscrit aux informations d'état de communication de l'un des utilisateurs U1 ou U2.

Cette base de données indique que le serveur 50 dinformations a souscrit aux informations d'état de communication de l'utilisateur U1.

Le serveur 40 de notification analyse les paramètres de la communication à laquelle participe l'utilisateur U1 (ici les identifiants des correspondants de U1) et au cours d'une étape E18, il envoie au serveur 50 d'informations un message N comportant une notification de la communication se déroulant entre les utilisateurs U1 et U2. Ce message N comporte également un identifiant ID2 de l'utilisateur U2.

Le serveur 50 d'informations reçoit au cours d'une étape F12 le message N de notification du serveur 40 de notification et l'identifiant ID2 de l'utilisateur U2.

Sur réception de ce message de notification, le serveur 50 d'informations prépare un message, destiné ici à l'utilisateur U1, proposant d'autoriser l'utilisateur U2 identifié dans ce message par l'identifiant ID2, à accéder aux données D1 de l'utilisateur U1, en vue dun partage des données D1 entre les deux utilisateurs. Comme pour le mode de réalisation 1, ce message prend la forme ici d'une page d'accueil personnalisée.

Ainsi, au cours dune étape F14, le serveur 50 d'informations met à jour la page d'accueil envoyée précédemment à l'utilisateur U1 pour lui proposer d'autoriser l'utilisateur U2 à accéder à ses données D1. Sur cette page d'accueil apparaît l'identifiant ID2 de l'utilisateur U2. Cette page d'accueil constitue un message envoyé à l'utilisateur U1 au cours dune étape F16 *via* le canal de communication dédié aux données.

Par ailleurs, dans l'exemple décrit ici, comme l'utilisateur U1 ne consulte plus nécessairement la page d'accueil du serveur 50 d'informations, mais probablement une autre page contenant les données multimédia D1 sur ce serveur 50, le serveur 50 d'informations envoie également au cours d'une étape F18 un message d'alerte à l'utilisateur U1. Ce message d'alerte est par exemple envoyé sous la forme dune fenêtre intruse de dialogue (fenêtre « pop-up ») prévenant l'utilisateur U1 dune proposition visant à autoriser l'utilisateur U2, identifié par ID2, à accéder à ses données D1 (par exemple sous la forme d'une proposition de partage des données D1 avec l'utilisateur U2), ou encore invitant l'utilisateur U1 à consulter la page d'accueil du serveur 50 d'informations.

L'étape F34 de réception de la réponse de l'utilisateur U1 et de mémorisation de la réponse de U1 dans la base de données de partage et l'étape F36 de vérification dans la base de données de partage si tous les utilisateurs en communication avec l'utilisateur U1 ont autorisé leurs correspondants à accéder à leurs données respectives sont identiques à celles décrites dans le mode de réalisation 1 pour le serveur 50 d'informations.

On suppose maintenant que l'utilisateur U2 envoie, depuis son ordinateur PC T2B *via* le deuxième canal de communication, une requête d'accès R au serveur 50 d'informations pour accéder à des données D2 lui appartenant et hébergées sur le serveur 50 d'informations.

La succession d'étapes suivant la réception de la requête d'accès R par le serveur 50 d'informations jusqu'à la mise en place du partage des données multimédia D1 et D2 entre les utilisateurs U1 et U2 est identique à celle décrite dans le mode de réalisation 1. Il s'agit des étapes suivantes :
- pour le serveur 50 d'informations :
   o de l'étape F24 de réception de la requête R comportant l'identifiant ID2 de l'utilisateur U2 ;
   o de l'étape F26 de souscription (requête S) aux informations d'état de communication de l'utilisateur U2, auprès du serveur 40 de notification ;
   o de l'étape F28 de réception d'un message N de notification de communication entre les utilisateurs U2 et U1 comportant un identifiant ID1 de l'utilisateur U1 ;
   o de l'étape F30 de personnalisation de la page d'accueil envoyée à l'utilisateur U2 comportant une proposition pour autoriser l'accès aux données multimédia D2 par l'utilisateur U1 identifié par ID1 ;
   o de l'étape F32 d'envoi de cette page d'accueil à l'utilisateur U2 ;
   o de l'étape F34 de réception de la réponse de l'utilisateur U2 à la proposition d'autorisation et de partage des données avec l'utilisateur U1 et de mémorisation de la réponse dans la base de données de partage ;
   o de l'étape F36 de vérification que les utilisateurs U1 et U2 ont autorisé l'accès à U2 et U1 à leurs données multimédia respectives D1 et D2 ; et
- pour le serveur 40 de notification :
   o de l'étape E20 de réception dune requête S de souscription du serveur 50 d'informations aux informations d'état de communication de l'utilisateur U2 ;
   o de l'étape E22 de consultation de la base de données 46 pour obtenir l'état de communication de l'utilisateur U2 à partir de l'identifiant ID2 ;
   o de l'étape E24 de vérification si l'utilisateur U2 est en communication et le cas échéant d'analyse des paramètres de la communication pour extraire un identifiant ID1 de l'utilisateur U1 ; et
   o de l'étape E26 d'envoi d'un message comportant une notification N de la communication établie avec l'utilisateur U2 et un identifiant ID1 de l'utilisateur U1.

Lorsque les utilisateurs U1 et U2 ont accepté le partage de leurs données multimédia D1 et D2 respectives en autorisant les utilisateurs U2 et U1 respectivement à accéder aux données D1 et D2, le partage des données multimédia entre les deux utilisateurs est établi au cours de l'étape F38 selon les techniques décrites précédemment dans le mode de réalisation 1.

Comme décrit précédemment pour les deux modes de réalisation particuliers présentés, l'invention permet à au moins deux utilisateurs distincts d'accéder à un même ensemble d'informations (par exemple en vue de partager cet ensemble d'informations), selon les hypothèses suivantes :
- le premier et le second utilisateur échangent une communication *via* un premier canal de communication ; et
- les informations accédées et partagées transitent *via* un deuxième canal de communication, distinct du premier canal.
La proposition pour autoriser le second (respectivement le premier) utilisateur à accéder aux données du premier (respectivement du second) utilisateur est faite sans que le premier (respectivement le second) utilisateur n'ait besoin de configurer le serveur d'informations avec un identifiant du second (respectivement du premier) utilisateur. Ceci est fait automatiquement grâce à la détection de la communication établie entre les utilisateurs et aux identifiants de ces utilisateurs.

## Revendications

1. Procédé de télécommunication permettant à un premier utilisateur et au moins un deuxième utilisateur d'accéder à un même ensemble d'informations (D1,D2) sur un serveur d'informations, ledit procédé comportant une étape (F24) de réception par ledit serveur d'informations d'une requête d'accès (R,R') émise via un premier canal par ledit premier utilisateur pour accéder via ledit premier canal audit ensemble d'informations (D1,D2), ladite requête (R,R') comportant un identifiant (ID1,ID2) dudit premier utilisateur (U1,U2),
ledit procédé étant **caractérisé en ce qu'**il comporte en outre :
- une étape d'envoi (F26) d'une requête de souscription par ledit serveur d'informations à un serveur de notification pour connaître un état de communication dudit premier utilisateur, ladite requête comportant l'identifiant dudit premier utilisateur ; et
- lorsqu'une communication entre ledit premier utilisateur et ledit au moins un deuxième utilisateur établie sur un deuxième canal distinct dudit premier canal, est détectée par ledit serveur de notification à l'aide dudit identifiant :
o une étape d'envoi (E26) par ledit serveur de notification audit serveur d'informations d'un message de notification de ladite communication comportant un identifiant dudit au moins un deuxième utilisateur ;
o une étape (F16,F18,F32) d'envoi par ledit serveur d'informations audit premier utilisateur via ledit premier canal, d'un message comportant ledit identifiant (ID2,ID1) dudit au moins un deuxième utilisateur (U2,U1) et proposant d'autoriser ledit au moins un deuxième utilisateur (U2,U1) à accéder audit ensemble d'informations (D1,D2) ; et
o si ledit premier utilisateur accepte ladite proposition, une étape (F38) au cours de laquelle ledit serveur d'informations établit un partage dudit ensemble d'informations entre ledit premier utilisateur et ledit deuxième utilisateur.

2. Procédé d'envoi d'un message à un premier utilisateur, mis en oeuvre dans un serveur d'informations et comportant une étape de réception d'une requête d'accès émise via un premier canal par ledit premier utilisateur pour accéder via ledit premier canal à un ensemble d'informations sur ledit serveur, la requête d'accès comportant un identifiant dudit premier utilisateur,
ledit procédé étant **caractérisé en ce qu'**il comporte en outre :
- une étape d'envoi (F26) d'une requête de souscription à un serveur de notification pour connaître un état de communication dudit premier utilisateur, ladite requête comportant l'identifiant dudit premier utilisateur;
- si en réponse à ladite requête de souscription, une communication établie entre ledit premier utilisateur et au moins un deuxième utilisateur sur un deuxième canal distinct dudit premier canal est notifiée (F12,F28) par ledit serveur de notification audit serveur d'informations par un message de notification comprenant un identifiant dudit au moins un deuxième utilisateur, une étape d'envoi (F16,F32) via ledit premier canal d'un message audit premier utilisateur, ce message comportant ledit identifiant dudit au moins un deuxième utilisateur et proposant d'autoriser ledit deuxième utilisateur à accéder audit ensemble d'informations ; et
- après réception (F34) d'une réponse dudit premier utilisateur acceptant ladite proposition, une étape (F38) d'établissement d'un partage dudit ensemble d'informations entre ledit premier utilisateur et ledit deuxième utilisateur.

3. Programme d'ordinateur comportant des instructions pour l'exécution des étapes du procédé selon la revendication 2 lorsque ledit programme est exécuté par un ordinateur.

4. Support d'enregistrement lisible par un ordinateur sur lequel est enregistré un programme d'ordinateur comprenant des instructions pour l'exécution des étapes du procédé selon la revendication 2.

5. Serveur (50) d'informations comportant :
- des moyens (55) pour recevoir une requête d'accès (R) émise via un premier canal par un premier utilisateur (U1) pour accéder via ledit premier canal à un ensemble d'informations (D1,D2) localisé sur ledit serveur, ladite requête (R) comportant un identifiant (ID1) dudit premier utilisateur ;
- des moyens (54) pour envoyer une requête de souscription à un serveur de notification pour connaître un état de communication dudit premier utilisateur, ladite requête comportant l'identifiant (ID1) dudit premier utilisateur ;
- des moyens pour recevoir dudit serveur de notification un message de notification d'une communication établie entre ledit premier utilisateur et au moins un deuxième utilisateur sur un deuxième canal distinct dudit premier canal, et comportant un identifiant dudit au moins un deuxième utilisateur ;
- des moyens (55) pour envoyer via ledit premier canal audit premier utilisateur, sur réception dudit message de notification, un message comportant ledit identifiant dudit au moins un deuxième utilisateur (U2) et proposant d'autoriser ledit au moins un deuxième utilisateur (U2) à accéder audit ensemble d'informations (D1,D2) ; et
- après réception d'une réponse dudit premier utilisateur acceptant ladite proposition, des moyens pour établir un partage dudit ensemble d'informations entre ledit premier utilisateur et ledit deuxième utilisateur.

6. Système (60) de télécommunication permettant à plusieurs utilisateurs d'accéder à un même ensemble d'informations (D1,D2), ledit système étant **caractérisé en ce qu'**il comporte :
- un serveur d'informations selon la revendication 5 et
- un serveur de notification comprenant :
o des moyens (45) pour recevoir une requête (S) de souscription émise par ledit serveur (50) d'informations pour connaître un état de communication d'un premier utilisateur (U1), ladite requête comportant un identifiant dudit premier utilisateur ;
o des moyens (43) pour obtenir, depuis une base de données (46) à l'aide de l'identifiant (ID1) dudit premier utilisateur, un état de communication dudit premier utilisateur (U1) ; et
o lorsqu'une communication est établie entre ledit premier utilisateur et au moins un deuxième utilisateur, des moyens (45) pour envoyer vers ledit serveur (50) d'informations en réponse à ladite requête de souscription (S), un message de notification (N) de ladite communication, ledit message comportant un identifiant (ID2) dudit au moins un deuxième utilisateur (U2), déterminé à l'aide de ladite base de données (46).

7. Système (60) selon la revendication 6, **caractérisé en ce qu'**il comporte en outre un serveur (20) d'application comportant :
- des moyens pour détecter l'existence d'une communication établie entre au moins deux utilisateurs (U1,U2) sur un canal d'un réseau de télécommunications ; et
- des moyens pour envoyer audit serveur (40) de notification un message (C) comportant une notification de l'existence de ladite communication et des identifiants (ID1,ID2) desdits au moins deux utilisateurs (U1,U2) participant à ladite communication.

## Claims

1. Telecommunication method allowing a first user and at least one second user to access one and the same set of information (D1,D2) on an information server, said method comprising a step (F24) of reception by said information server of an access request (R,R') sent via a first channel by said first user to access via said first channel said set of information (D1,D2), said request (R,R') comprising an identifier (ID1,ID2) of said first user (U1,U2),
said method being **characterized in that** it furthermore comprises:
- a step (F26) of dispatching a request for subscription by said information server to a notification server so as to ascertain a state of communication of said first user, said request comprising the identifier of said first user; and
- when a communication between said first user and said at least one second user established on a second channel distinct from said first channel is detected by said notification server with the aid of said identifier:
○ a step (E26) of dispatching by said notification server to said information server of a notification message notifying of said communication comprising an identifier of said at least one second user;
○ a step (F16,F18,F32) of dispatching by said information server to said first user via said first channel of a message comprising said identifier (ID2,ID1) of said at least one second user (U2,U1) and proposing to authorize said at least one second user (U2,U1) to access said set of information (D1,D2); and
○ if said first user accepts said proposal, a step (F38) in the course of which said information server establishes a sharing of said set of information between said first user and said second user.

2. Method of dispatching a message to a first user, implemented in an information server and comprising a step of receiving an access request sent via a first channel by said first user to access via said first channel a set of information on said server, said access request comprising an identifier of said first user,
said method being **characterized in that** it furthermore comprises:
- a step (F26) of dispatching a request for subscription to a notification server so as to ascertain a state of communication of said first user, said request comprising the identifier of said first user;
- if in response to said request for subscription, a communication established between said first user and at least one second user on a second channel distinct from said first channel is notified (F12,F28) by said notification server to said information server by a notification message comprising an identifier of said at least one second user, a step (F16,F32) of dispatching via said first channel of a message to said first user, this message comprising said identifier of said at least one second user and proposing to authorize said second user to access said set of information; and
- after receipt (F34) of a response from said first user accepting said proposal, a step (F38) of establishing a sharing of said set of information between said first user and said second user.

3. Computer program comprising instructions for the execution of the steps of the method according to Claim 2 when said program is executed by a computer.

4. Recording medium readable by a computer on which is recorded a computer program comprising instructions for the execution of the steps of the method according to Claim 2.

5. Information server (50) comprising:
- means (55) for receiving an access request (R) sent via a first channel by a first user (U1) to access via said first channel a set of information (D1,D2) located on said server, said request (R) comprising an identifier (ID1) of said first user;
- means (54) for dispatching a request for subscription to a notification server so as to ascertain a state of communication of said first user, said request comprising the identifier (ID1) of said first user;
- means for receiving from said notification server a notification message notifying of a communication established between said first user and at least one second user on a second channel distinct from said first channel, and comprising an identifier of said at least one second user;
- means (55) for dispatching via said first channel to said first user, on receipt of said notification message, a message comprising said identifier of said at least one second user (U2) and proposing to authorize said at least one second user (U2) to access said set of information (D1,D2); and
- after receipt of a response from said first user accepting said proposal, means for establishing a sharing of said set of information between said first user and said second user.

6. Telecommunication system (60) allowing several users to access one and the same set of information (D1,D2), said system being **characterized in that** it comprises:
- an information server according to Claim 5, and
- a notification server comprising:
○ means (45) for receiving a request (S) for subscription sent by said information server (50) so as to ascertain a state of communication of a first user (U1), said request comprising an identifier of said first user;
○ means (43) for obtaining, from a database (46) with the aid of the identifier (ID1) of said first user, a state of communication of said first user (U1); and
○ when a communication is established between said first user and at least one second user, means (45) for dispatching to said information server (50) in response to said request for subscription (S), a notification message (N) notifying said communication, said message comprising an identifier (ID2) of said at least one second user (U2), determined with the aid of said database (46).

7. System (60) according to Claim 6, **characterized in that** it furthermore comprises an application server (20) comprising:
- means for detecting the existence of a communication established between at least two users (U1,U2) on a channel of a telecommunications network; and
- means for dispatching to said notification server (40) a message (C) comprising a notification of the existence of said communication and identifiers (ID1,ID2) of said at least two users (U1,U2) participating in said communication.

## Patentansprüche

1. Telekommunikationsverfahren, das es einem ersten Benutzer und mindestens einem zweiten Benutzer ermöglicht, auf einen selben Informationssatz (D1, D2) auf einem Informationsserver zuzugreifen, wobei das Verfahren einen Schritt (F24) des Empfangs einer Zugriffsanfrage (R, R'), die über einen ersten Kanal von dem ersten Benutzer gesendet wurde, um über den ersten Kanal auf den Informationssatz (D1, D2) zuzugreifen, durch den Informationsserver umfasst, wobei die Anfrage (R, R') einen Identifikator (ID1, ID2) des ersten Benutzers (U1, U2) umfasst,
wobei das Verfahren **dadurch gekennzeichnet ist, dass** es ferner Folgendes umfasst:
- einen Schritt (F26) des Sendens einer Subskriptionsanfrage durch den Informationsserver an einen Ankündigungsserver, um einen Kommunikationszustand des ersten Benutzers zu erfahren, wobei die Anfrage den Identifikator des ersten Benutzers umfasst; und
- wenn eine Kommunikation zwischen dem ersten Benutzer und dem mindestens einen zweiten Benutzer auf einem zweiten Kanal, der vom ersten Kanal getrennt ist, hergestellt ist, wird vom Ankündigungsserver mit Hilfe des Identifikators Folgendes erfasst:
○ ein Schritt (E26) des Sendens einer Ankündigungsmeldung der Kommunikation, umfassend einen Identifikator des mindestens einen zweiten Benutzers, durch den Ankündigungsserver an den Informationsserver;
○ ein Schritt (F16, F18, F32) des Sendens einer Meldung, umfassend den Identifikator (ID2, ID1) des mindestens einen zweiten Benutzers (U2, U1), durch den Informationsserver an den ersten Benutzer über den ersten Kanal, wobei diese Meldung vorschlägt, den mindestens einen zweiten Benutzer (U2, U1) zu autorisieren, auf den Informationssatz (D1, D2) zuzugreifen; und
○ wenn der erste Benutzer den Vorschlag akzeptiert, ein Schritt (F38), während dessen der Informationsserver eine Aufteilung des Informationssatzes zwischen dem ersten Benutzer und dem zweiten Benutzer durchführt.

2. Verfahren zum Senden einer Meldung an einen ersten Benutzer, das in einem Informationsserver zum Einsatz kommt und einen Schritt des Empfangens einer Zugriffsanfrage umfasst, die über einen ersten Kanal von dem ersten Benutzer gesandt wird, um über den ersten Kanal auf einen Informationssatz auf dem Server zuzugreifen, wobei die Zugriffsanfrage einen Identifikator des ersten Benutzers umfasst,
wobei dieses Verfahren **dadurch gekennzeichnet ist,**
**dass** es ferner Folgendes umfasst:
- einen Schritt (F26) des Sendens einer Subskriptionsanfrage an einen Ankündigungsserver, um einen Kommunikationszustand des ersten Benutzers zu erfahren, wobei die Anfrage den Identifikator des ersten Benutzers umfasst;
- wenn als Antwort auf die Subskriptionsanfrage eine zwischen dem ersten Benutzer und mindestens einem zweiten Benutzer auf einem zweiten, vom ersten getrennten Kanal erstellte Kommunikation vom Ankündigungsserver an den Informationsserver angekündigt wird (F12, F28), und zwar durch eine Ankündigungsmeldung, umfassend einen Identifikator des mindestens einen zweiten Benutzers, einen Schritt (F16, F32) des Sendens einer Meldung an den ersten Benutzer über den ersten Kanal, wobei diese Meldung den Identifikator des mindestens einen zweiten Benutzers umfasst und vorschlägt, den zweiten Benutzer zu autorisieren, auf den Informationssatz zuzugreifen; und
- nach Erhalt (F34) einer Antwort des ersten Benutzers, der den Vorschlag akzeptiert, einen Schritt (F38) der Durchführung einer Aufteilung des Informationssatzes zwischen dem ersten Benutzer und dem zweiten Benutzer.

3. Computerprogramm, umfassend Befehle für die Ausführung der Schritte des Verfahrens nach Anspruch 2, wenn das Programm von einem Computer ausgeführt wird.

4. Von einem Computer lesbarer Aufzeichnungsträger, auf dem ein Computerprogramm aufgezeichnet wird, umfassend Befehle für die Ausführung der Schritte des Verfahrens nach Anspruch 2.

5. Informationsserver (50), umfassend:
- Mittel (55), um eine Zugriffsanfrage (R) zu empfangen, die über einen ersten Kanal von einem ersten Benutzer (U1) gesendet wird, um über den ersten Kanal auf einen Informationssatz (D1, D2) zuzugreifen, der auf dem Server lokalisiert ist, wobei die Anfrage (R) einen Identifikator (ID1) des ersten Benutzers umfasst;
- Mittel (54), um eine Subskriptionsanfrage an einen Ankündigungsserver zu senden, um einen Kommunikationszustand des ersten Benutzers zu erfahren, wobei die Anfrage den Identifikator (ID1) des ersten Benutzers umfasst;
- Mittel, um vom Ankündigungsserver eine Ankündigungsmeldung einer Kommunikation zu empfangen, die zwischen dem ersten Benutzer und mindestens einem zweiten Benutzer auf einem zweiten, vom ersten getrennten Kanal erstellt wurde, und umfassend einen Identifikator des mindestens einen zweiten Benutzers;
- Mittel (55), um über den ersten Kanal an den ersten Benutzer bei Empfang der Ankündigungsmeldung eine Meldung zu senden, umfassend den Identifikator des mindestens einen zweiten Benutzers (U2), die vorschlägt, den mindestens einen zweiten Benutzer (U2) zu autorisieren, auf den Informationssatz (D1, D2) zuzugreifen; und
- nach Empfang einer Antwort vom ersten Benutzer, der den Vorschlag akzeptiert, Mittel, um eine Aufteilung des Informationssatzes zwischen dem ersten Benutzer und dem zweiten Benutzer durchzuführen.

6. Telekommunikationssystem (60), das es mehreren Benutzern ermöglicht, auf einen selben Informationssatz (D1, D2) zuzugreifen, wobei das System **dadurch gekennzeichnet ist, dass** es Folgendes umfasst:
- einen Informationsserver nach Anspruch 5 und
- einen Ankündigungsserver, umfassend:
○ Mittel (45), um eine Subskriptionsanfrage (S) zu empfangen, die von dem Informationsserver (50) gesendet wurde, um einen Kommunikationszustand eines ersten Benutzers (U1) zu erfahren, wobei die Anfrage einen Identifikator des ersten Benutzers umfasst;
○ Mittel (43), um von einer Datenbasis (46) mit Hilfe des Identifikators (ID1) des ersten Benutzers einen Kommunikationszustand des ersten Benutzers (U1) zu erhalten; und
○ wenn eine Kommunikation zwischen dem ersten Benutzer und mindestens einem zweiten Benutzer hergestellt ist, Mittel (45), um an den Informationsserver (50) als Antwort auf die Subskriptionsanfrage (S) eine Ankündigungsmeldung (N) der Kommunikation zu senden, wobei die Meldung einen Identifikator (ID2) des mindestens einen zweiten Benutzers (U2) umfasst, der mit Hilfe der Datenbasis (46) bestimmt wurde.

7. System (60) nach Anspruch 6, **dadurch gekennzeichnet, dass** es ferner einen Anwendungsserver (20) aufweist, umfassend:
- Mittel, um das Bestehen einer Kommunikation, die zwischen mindestens zwei Benutzern (U1, U2) auf einem Kanal eines Telekommunikationsnetzes hergestellt wurde, zu erfassen; und
- Mittel, um an den Ankündigungsserver (40) eine Meldung (C) zu senden, umfassend eine Ankündigung des Bestehens der Kommunikation und Identifikatoren (ID1, ID2) der mindestens zwei Benutzer (U1, U2), die an der Kommunikation teilhaben.
